Europäisches Patentamt

(19) European Patent Office

Office européen des brevets

(11) Veröffentlichungsnummer: **0 237 811**
**B1**

(12) ## EUROPÄISCHE PATENTSCHRIFT

(45) Veröffentlichungstag der Patentschrift: **18.07.90**

(51) Int. Cl.⁵: **C 21 B 13/14**

(21) Anmeldenummer: **87102234.9**

(22) Anmeldetag: **17.02.87**

(54) Verfahren zur zweistufigen Reduktion von Eisenerz.

(30) Priorität: **08.03.86 DE 3607774**

(43) Veröffentlichungstag der Anmeldung:
**23.09.87 Patentblatt 87/39**

(45) Bekanntmachung des Hinweises auf die
Patenterteilung:
**18.07.90 Patentblatt 90/29**

(84) Benannte Vertragsstaaten:
**AT DE ES FR GB NL**

(56) Entgegenhaltungen:
**DE-A-2 629 743**
**FR-A-1 314 435**
**US-A-3 028 231**
**US-A-3 186 830**
**US-A-3 734 716**

(73) Patentinhaber: **KLÖCKNER CRA PATENT GMBH**
**Klöcknerstrasse 29**
**D-4100 Duisburg (DE)**

(72) Erfinder: **Turner, Richard Edwin, Dr.**
**verstorben (DE)**
Erfinder: **Fassbinder, Hans-Georg, Dr. rer. nat.**
**Am Annaschacht 32**
**D-8458 Sulzbach-Rosenberg (DE)**
Erfinder: **Moodie, Jonathan Paul**
**Batteriegasse 10**
**D-8450 Amberg (DE)**

(74) Vertreter: **Kador & Partner**
**Corneliusstrasse 15**
**D-8000 München 5 (DE)**

Courier Press, Leamington Spa, England.

## Beschreibung

Die Erfindung bezieht sich auf ein Verfahren zur zweistufigen Schmelzreduktion von Eisenerz, bei dem in einem Schmelzzyklon Eisenerz im wesentlichen zu FeO vorreduziert und gleichzeitig aufgeschmolzen wird und dann in einem nachgeschalteten Eisenbadreaktor durch Zugabe von kohlenstoffenthaltenden Brennstoffen und oxidierendem Gas flüssiges Roheisen erzeugt wird, wobei als oxidierendes Gas vorzugsweise vorgewärmte Luft, d.h. Heißwind, angewendet wird, der zur Erzielung eines hohen Nachverbrennungsgrades von 30% bis 50% der aus der Eisenschmelze entweichenden Reaktionsgase CO und $H_2$, auf die Eisenschmelze geblasen wird.

Eine Reihe von Verfahren, flüssiges Roheisen direkt aus Erz zu erzeugen, sind bereits bekannt. Einige dieser bekannten Prozesse laufen nur in einem Reaktorgefäß ab, dagegen ist bei anderen Verfahren das Einschmelzaggregat vom Reduktionsgefäß für das Eisenerz getrennt.

Die europäische Patentanmeldung 0 114 040 beschreibt ein Verfahren zur Erzeugung von flüssigem Roheisen und Reduktionsgas in einem Einschmelzvergaser durch die Zugabe von Kohle und Einblasen von sauerstoffhaltigem Gas, wobei ein zweischichtiges Fließbett aus Kokspartikeln und das Einblasen der sauerstoffhaltigen Gase in mehreren Ebenen angewendet wird.

Die deutsche Offenlegungsschrift 30 34 539 and EP—A—0048008 befaßt sich mit einem Prozeß zur direkten Erzeugung von flüssigem Roheisen aus stückigem Eisenerz, das in einem Direktreduktionsschachtofen in Form einer losen Schüttung mittels eines heißen Reduktionsgases zu Eisenschwamm reduziert und dann durch eine Austragsvorrichtung im heißen Zustand einem Einschmelzvergaser zugeführt wird. In diesem Gefäß schmilzt man durch Zufuhr von Kohle und sauerstoffhaltigem Gas den Eisenschwamm auf und erzeugt das Reduktionsgas für den Schachtofen.

In der europäischen Patentanmeldung 0 126 391 wird ein vorteilhafter Verbundprozeß aus Erzreduktionsgefäß und Einschmelzgefäß beschrieben, bei dem die aus der Eisenschmelze austretenden Reaktionsgase im Einschmelzgefäß teilweise nachverbrannt, die dabei entstehende Wärme weitgehend an die Schmelze übertragen und die Reaktionsgase auf dem Weg zum Erzreduktionsgefäß mit Reduktionsmitteln abgekühlt und reduziert werden.

Alle bekannten Verfahren weisen, wenn auch in unterschiedlichem Umfang, den gemeinsamen Nachteil auf, daß sie mit Gasüberschuß arebeiten. Selbst bei den bekannten zweistufigen Verfahren ist das Gas nach der Vorreduktion des Eisenerzes noch relativ energiereich und als Brenngas zu verwenden. Demgemäß wird die Wirtschaftlichkeit der beschriebenen Prozesse deutlich von der möglichen Verwertung ihres Gasüberschusses bestimmt.

Der vorliegenden Erfindung liegt demgemäß die Aufgabe zugrunde, ein Verfahren zu schaffen, das neben dem Einsatz energiearmer Kohle, bzw. Kohle mit hohem Anteil flüchtiger Bestandteile, praktisch keinen weiterverbrennbaren Gasüberschuß produziert und die Vorreduktion des Eisenerzes auf einfache Weise löst.

Das erfindungsgemäße Verfahren löst diese Aufgabe dadurch, daß die staubbeladenen, teilverbrannten Reaktionsgase aus dem Eisenbadreaktor auf dem Weg zum Schmelzzyklon durch die Zufuhr von Heißwind mit einer Temperatur von 800°C bis 1500°C, vorzugsweise 1100°C bis 1300°C, beschleunigt und weiter nachverbrannt werden.

Gemäß der vorliegenden Erfindung erzeugt man in einem Eisenbadreaktor flüssiges Roheisen. Dieser Eisenbadreaktor kann konverterähnliche Forme wie bei der Stahlerzeugung aufweisen oder ein weitgehend geschlossenes, langgestrecktes, trommelähnliches Einschmelzgefäß sein. Der Eisenbadreaktor verfügt in jedem Fall über Einleitungsdüsen mit Schutzmediumummantelung unterhalb der Badoberfläche und Aufblasvorrichtungen in Form von Düsen und/oder Lanzen oberhalb der Badoberfläche. Die Roheisenabfuhr kann sowohl kontinuierlich als auch diskontinuierlich über ein in bekannter Weise verschließbares oder offenes Abstichloch erfolgen.

Der Schmelze im Eisenbadreaktor werden kohlenstoffhaltige Brennstoffe, wie beispielsweise Koks, auch Braunkohlen- und Petrolkoks, hauptsächlich jedoch Kohle in unterschiedlicher Qualität, zugeführt. Weiterhin setzt man der Eisenschmelze Schlackenbildner, wie beispielsweise Kalk, Flußspat, zur Einstellung der gewünschten Schlackenzusammensetzung zu. Obwohl es für das erfindungsgemäße Verfahren gleichbedeutend ist, ob diese Stoffe auf das Bad oder unterhalb der Badoberfläche in die Schmelze geleitet werden, wird die Zugabe durch Unterbaddüsen bevorzugt.

Sauerstoff und/oder andere oxidierende Gase werden jedoch nur im begrenzten Umfang unterhalb der Badoberfläche in die Eisenschmelze geblasen. Bevorzugt wird vorgewärmte Luft, d.h. Heißwind, zur Erzielung eines hohen Nachverbrennungsgrades der aus der Schmelze entweichenden Reaktionsgase, auf die Badoberfläche geblasen. Als Zugabevorrichtungen können bekanntermaßen Lanzen und Düsen mit oder ohne Kühlung oder Schutzmediumummantelung eingesetzt werden. Bevorzugt wendet man jedoch Düsen, Windformen oder düsenähnliche Öffnungen in der feuerfesten Ausmauerung des Eisenbadreaktors ohne Kühlmedien an.

Die Reaktionsgase aus der Schmelze, hauptsächlich CO und $H_2$, werden etwa von 30 bis 50% zu $CO_2$ bzw. $H_2O$ nachverbrannt, und die dabei freiwerdende Wärme der Schmelze zugeführt. Es kommen dabei weitegehend die Lehren des deutschen Patentes 28 38 983 zur Anwendung.

Erfindungsgemäß werden die Abgase aus dem Eisenbadreaktor, die hauptsächlich aus CO, $CO_2$, $H_2$, $H_2O$ und $N_2$ bestehen, und unterschiedliche Mengen von Staub und feinen Eisen- bzw. Eisenoxydtröpfchen mitreißen, direkt dem Schmelzzyklon zugeführt. Gemäß der Erfindung kann von der Gesamtabgasmenge auch nur ein Teilstrom von ca. 30% bis 80%, vorzugsweise 40% bis 60%, zu dem Schmelzzyklon gleitet werden, während man die restliche Gasmenge beispielsweise einem Abhitzekessel zuführt, dort abkühlt und anschließend das weitegehend vom Staub befreite Abgas zur Luftvorwärmung verwendet. Es liegt weiterhin im Sinne der Erfindung, gas Abgas des zweiten Teilstroms, der nicht dem Schmelzzyklon zugeführt wird, anders zu nutzen, beispielsweise zur Vorreduktion von Eisenerz oder als Heizgas.

Der Standort des Schmelzzyklons kann gemäß der Erfindung grundsätzlich beliebig gewählt werden. Eine bevorzugte Ausführungsform nach dem erfindungsgemäßen Verfahren sieht jedoch die Montage des Schmelzzyklons im direkten Kontakt mit dem Eisenbadreaktor vor, so daß das weitgehend aus Wüstit bestehende Vorschmelzprodukt aus dem Schmelzzyklon direkt in den Eisenbadreaktor abfließen kann.

Ein wesentliches Merkmal der vorliegenden Erfindung besteht darin, die Reaktionsgase aus dem Eisenbadreaktor vor Eintritt in den Schmelzzyklon durch die Zufuhr von Heißwind mit einer Temperatur von 800°C bis 1500°C, vorzugsweise 1100°C bis 1300°C, zu beschleunigen und weiter nachzuverbrennen. Es hat sich überraschenderweise gezeigt, daß mit der Zufuhr des Heißwindes als Treibstrahl nach dem Injektorprinzip in die Leitung der Reaktionsgase zum Schmelzzyklon eine weitere Nachverbrennung der mit 30 bis 50% vorverbrannten Reaktionsgase bis zur Vollverbrennung, sicher jedoch bis mindestens 65%, meist 80%, erreicht werden kann. Die dabei freiwerdende Wärme und das Reduktionspotential der Gase reichen aus, im Schmelzzyklon flüssiges FeO, d.h. Wüstit, zu erzeugen. Gemäß der Erfindung wird durch die mit Heißwind betriebene Injektorpumpe eine Druckerhöhung der in den Schmelzzyklon eintretenden Gase von ca. 20 bis 80 mbar, vorzugsweise 25 bis 50 mbar, bewirkt. Gleichzeitig erreicht man durch die Heißwindzufuhr eine hohe Nachverbrennung der Abgase von mindestens 65% bis hin zur Vollverbrennung und damit eine hohe Eintrittstemperatur der Gase von mehr als 2000°C in den Schmelzzyklon.

Gemäß der Erfindung kann Eisenerz in gemahlener Form zusammen mit dem Heißwind der Injektorpumpe in den Schmelzzyklon geblasen werden. Das Erz kann aber auch, unabhängig von Heißwind, direkt durch eine separate Öffnung dem Schmelzzyklon beispielsweise im Eintrittsbereich der heißen Gase zugeführt werden.

Es liegt im Sinne der Erfindung, weitere Stoffe, hauptsächlich Schlackenbildner, wie Kalk, dem Schmelzzyklon zuzuführen. Es hat sich insbesondere bei ausreichendem Wärmeangebot im Schmelzzyklon die Zufuhr von Kalkstein zum Ausgleich der Wärmebilanz bewährt. Die Wärmeausnutzung der heißen Verbrennungsgase im Schmelzzyklon nicht nur zum Reduzieren und Aufschmelzen des Eisenerzes, sondern gleichzeitig zum Entsäuern des Kalksteins, wirkt sich vorteilhaft auf die Wirtschaftlichkeit des Gesamtprozesses aus.

Das Zyklongefäß hat vorzugsweise wassergekühlte Wände, die mit Rauhigkeiten versehen sind, so daß eine Eisenoxidschicht als feste Schutzhaut auffriert, an deren Oberfläche das flüssige Wüstit abläuft. Dieser Aufbau des Schmelzzyklons erhöht seine Staubabscheidewirkung, denn es läßt sich somit, trotz der hohen Betriebstemperatur, mit einem Tauchrohr arbeiten, das für die Abscheidung von Teilchen mit einem Durchmesser im $\mu$-Bereich wichtig ist.

Die Wärmebilanz, und damit die Effektivität des erfindungsgemäßen Verfahrens, kann durch die Sauerstoffanreicherung des Heißwindes günstig beeinflußt werden. Es liegt demgemäß im Sinne der Erfindung, den Heißwind durch Sauerstoffanreicherung bis zu 50% der Sauerstoffmenge, einzusetzen. Selbstverständlich ist diese Maßnahme von Fall zu Fall hinsichtlich ihrer Wirtschaftlichkeit zu betrachten und bietet sich immer dann an, wenn zum einen Sauerstoff kostengünstig zur Verfügung steht und zum anderen hohe Erzeinschmelzraten gefordert werden.

Die Erfindung wird nachfolgend an einer schematischen Darstellung und einem nichteinschränkenden Beispiel näher erläutert.

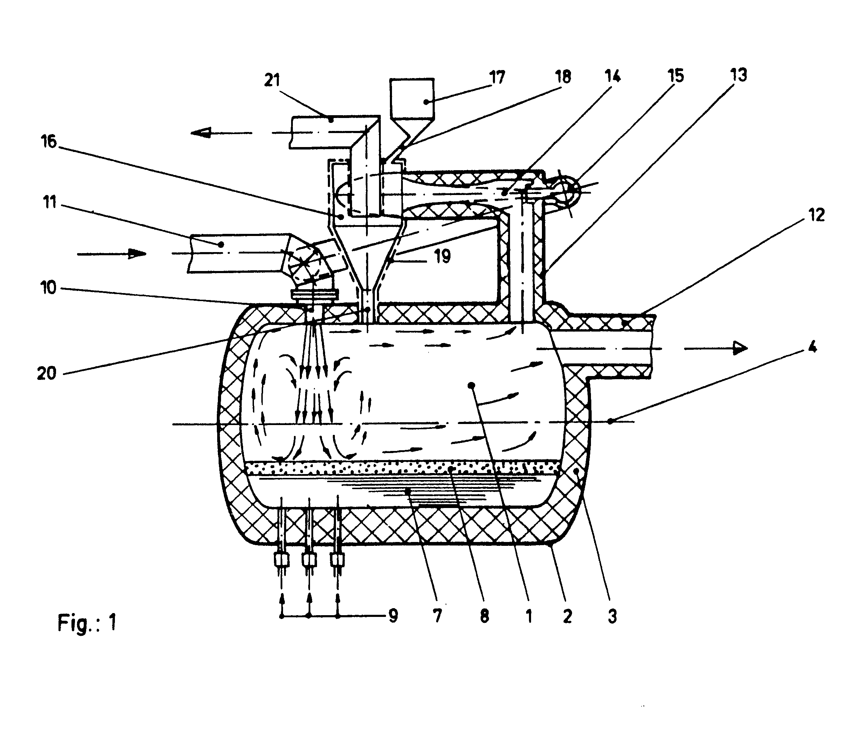

Figur 1 zeigt den Längsschnitt durch den Eisenbadreaktor mit integriertem Schmelzzyklon.

Ein Eisenbadreaktor 1 besteht aus einem Blechmantel 2 und einer feuerfesten Auskleidung 3. Er hat im wesentlichen die Form einer liegenden Trommel und ist um die Trommelachse 4 drehbar gelagert. Dieser Eisenbadreaktor hat im neu ausgemauerten Zustand ein freies Volumen von ca. 100 m³. In diesem Gefäß befindet sich eine Eisenschmelze 7 von 50 bis 120 t mit einem Kohlenstoffgehalt von ca. 2.5% und einer Temperatur von ca. 1600°C. Auf der Eisenschmelze befindet sich eine Schlackenschicht 8 von ca. 2 t mit einem CaO/SiO₂-Verhältnis von ca. 1.3.

Unterhalb der Eisenbadoberfläche sind in der feuerfesten Ausmauerung 3 des Gefäßes sechs Einblasdüsen 9 eingebaut. Der lichte Durchmesser dieser Einblasdüsen 9 beträgt 24 mm, durch die der Staub einer typischen Gasflammkohle mit einer Einblasrate von 600 kg/min der Schmelze zugeführt wird.

Gleichzeitig wird Heißwind mit einer Temperatur von ca. 1200°C durch die Windform 10 mit einer Rate von 2000 Nm³/min auf das Bad geblasen. Der Heißwind wird von einem nicht dargestellten Cowper über die Heißwindleitung 11 der Windform 10 zugeführt. Die Heißwindstrahlen bewirken einerseits den ständigen Abbrand des gelösten Kohlenstoffs in der Schmelze, so daß der Kohlenstoffgehalt des Bades trotz der kontinuierlichen Kohlezufuhr ungefähr gleichbleibt, und andererseits wird durch den Heißwind die teilweise Nachverbrennung der Reaktionsgase CO und H₂ aus dem Bad zu CO₂ und H₂O bewirkt. Im vorliegenden Fall kann ein mittlerer Nachverbrennungsgrad von 40% sichergestellt werden, und die dabei entstehende Wärme wird mit einem wärmetechnischen Wirkungsgrad von ca. 90% der Schmelze zugeführt.

Das Abgas aus dem Eisenbadreaktor hat eine Zusammensetzung von CO 23%, $CO_2$ 8%, $H_2$ 6%, $H_2O$ 9%, $N_2$ 54%. Der Volumenstrom beträgt insgesamt 2400 Nm³/min. Davon wird etwa die Hälfte über die Abgasleitung 12 direkt einem Abhitzekessel zugeführt, dort abgekühlt und anschließend zur Luftvorwärmung verwendet. Die andere Hälfte des Abgasstromes strömt durch die Leitung 13 und wird von der Injektorpumpe 14, die über die Zuführungsleitung 15 mit Heißwind versorgt wird, angesaugt, beschleunigt und weiter nachverbrannt. Der Injektorpumpe werden durch die Versorgungsleitung 15 ca. 400 Nm³/min Heißwind zugeführt. Das Abgas aus dem Eisenbadreaktor wird zu 70% nachverbrannt und tritt mit einer Eingangstemperatur von ca. 2500°C in den Schmelzzyklon 16 ein.

Im Eingangsbereich des Schmelzzyklons 16 führt man aus dem Bunker 17 über die Zuleitung 18 gemahlenes Erz mit einer Maximalkorngröße von ca. 1 mm mit einer Durchflußrate von 1500 kg/min zu. Im Schmelzzyklon 16, der mit wassergekühlten Wänden 19 ausgerüstet ist, wird das Feinerz aufgeschmolzen und zu FeO reduziert. Es strömt aus dem Schmelzzyklon über die Öffnung 20 in den Eisenbadreaktor 1. Dort findet die endgültige Reduktion zu metallischem Eisen statt.

Das weitgehend staubfreie Gas aus dem Schmelzzyklon 16 hat eine Zusammensetzung von 25% $CO_2$, 12% $H_2O$ und 63% $N_2$ und eine Temperatur von ca. 1500°C. Man führt es über die Leitung 21 einem weiteren Abhitzekessel zu, um den Wärmeinhalt des Gases auszunutzen.

## Patentansprüche

1. Verfahren zur zweistufigen Schmelzreduktion von Eisenerz, bei dem in einem Schmelzzyklon Eisenerz im wesentlichen zu Wüstit vorreduziert und gleichzeitig aufgeschmolzen wird und dann in einem nachgeschalteten Eisenbadreaktor durch Zugabe von kohlenstoffenthaltenden Brennstoffen und oxidierendem Gas flüssiges Roheisen erzeugt wird und das entstehende Reaktionsgas nachverbrannt wird, dadurch gekennzeichnet, daß die staubbeladenen, teilverbrannten Reaktionsgase aus dem Eisenbadreaktor auf dem Weg zum Schmelzzyklon durch die Zufuhr von Heißwind mit einer Temperatur von 800°C bis 1500°C beschleunigt und weiter nachverbrannt werden.

2. Verfahren nach Anspruch 1, dadurch gekennzeichnet, daß von den staubbeladenen, teilverbrannten Reaktionsgasen aus dem Eisenbadreaktor nur ein Teilstrom von 30% bis 80% dem Schmelzzyklon zugeführt wird.

3. Verfahren nach den Ansprüchen 1 oder 2, dadurch gekennzeichnet, daß zur Beschleunigung und Nachverbrennung der Abgase aus dem Eisenbadreaktor eine mit Heißwind betriebene Injektorpumpe eingesetzt wird.

4. Verfahren nach einem oder mehreren der Ansprüche 1 bis 3, dadurch gekennzeichnet, daß der Druck im Schmelzzyklon höher als im Eisenbadreaktor eingestellt wird.

5. Verfahren nach einem oder mehreren der Ansprüche 1 bis 4, dadurch gekennzeichnet, daß das Eisenerz in gemahlener Form zusammen mit dem Heißwind in den Schmelzzyklon eingeblasen wird.

6. Verfahren nach einem oder mehreren der Ansprüche 1 bis 5, dadurch gekennzeichnet, daß das Eisenerz unabhängig vom Heißwind durch eine separate Öffnung in den Schmelzzyklon eingeleitet wird.

7. Verfahren nach einem oder mehreren der Ansprüche 1 bis 6, dadurch gekennzeichnet, daß weitere Stoffe, insbesondere Schlackenbildner, in den Schmelzzyklon eingeblasen werden.

8. Verfahren nach einem oder mehreren der Ansprüche 1 bis 7, dadurch gekennzeichnet, daß gemahlener Kalkstein in den Schmelzzyklon eingeblasen wird.

9. Verfahren nach einem oder mehreren der Ansprüche 1 bis 8, dadurch gekennzeichnet, daß Heißwind mit erhöhtem Sauerstoffanteil bis zu 50% $O_2$ angewendet wird.

10. Verfahren nach einem oder mehreren der Ansprüche 1 bis 9, dadurch gekennzeichnet, daß der zugeführte Heißwind eine Temperatur von 1100°C bis 1300°C aufweist.

## Revendications

1. Procédé pour la réduction en deux étapes, par fusion, de minerai de fer, au cours duquel on préréduit le minerai de fer dans un cyclone de fusion, pour obtenir essentiellement de la wüstite, tout en le fondant en même temps, puis on obtient du fer brut liquide dans un réacteur de bain de fer qui suit, par addition de combustibles contenant du carbone et d'un gaz oxydant, et on soumet le gaz de réaction qui se dégage à une postcombustion, caractérisé en ce que les gaz de réaction chargés de poussières et partiellement brûlés, sont accélérés en sortant du réacteur de bain de fer, sur le trajet menant au cyclone de fusion, par l'introduction d'un vent chaud ayant une température de 800°C à 1500°C, et on les soumet ensuite à une réaction de postcombustion.

2. Procédé selon la revendication 1, caractérisé en ce qu'une partie seulement, de 30% à 80%, des gaz de réaction, chargés de poussières et partiellement brûlés, sont conduits au cyclone de fusion, à partir du réacteur de bain de fer.

3. Procédé selon l'une quelconque des revendications 1 ou 2, caractérisé en ce que l'on utilise une pompe à injection actionnée par le vent chaud pour accélérer et pour obtenir la postcombustion des gaz dégagés du réacteur de bain de fusion.

4. Procédé selon une ou plusieurs des revendications 1 à 3, caractérisé en ce que la pression dans le cyclone de fusion est réglée de façon à être plus élevée que dans le réacteur de bain de fer.

5. Procédé selon une ou plusieurs des revendications 1 à 4, caractérisé en ce que l'on insuffle dans le cyclone de fusion le minerai de fer sous forme broyée en même temps que le vent chaud.

6. Procédé selon une ou plusieurs des revendications 1 à 5, caractérisé en ce que le minerai de fer est introduit dans le cyclone de fusion, indépendamment du vent chaud, par une ouverture séparée.

7. Procédé selon une ou plusieurs des revendications 1 à 6, caractérisé en ce que l'on insuffle d'autres matières, en particulier des produits formant du laitier, dans le cyclone de fusion.

8. Procédé selon une ou plusieurs des revendications 1 à 7, caractérisé en ce que l'on insuffle de la pierre à chaux broyée dans le cyclone de fusion.

9. Procédé selon une ou plusieurs des revendications 1 à 8, caractérisé en ce que l'on utilise un vent chaud dans lequel la teneur en oxygène à été augmentée, jusqu'à 50% de $O_2$.

10. Procédé selon une ou plusieurs des revendications 1 à 9, caractérisé en ce que le vent chaud introduit a une température de 1100°C à 1300°C.

## Claims

1. A method for two-stage melt reduction of iron ore, in which iron ore is prereduced substantially to wüstite and at the same time melted down in a melting cyclone and then liquid hot metal is produced in an iron bath reactor connected to the outlet side by adding carbonaceous fuels and oxidizing gas and the resulting reaction gas is afterburned, characterized in that the dust-laden, partly burned reaction gases from the iron bath reactor are accelerated and afterburned further on the way to the melting cyclone by adding a hot blast with a temperature of 800°C to 1500°C.

2. A method according to claim 1, characterized in that only a part, 30% to 80%, of the dust-laden, partly burned reaction gases from the iron bath reactor is fed to the melting cyclone.

3. A method according to claim 1 or 2, characterized in that an injector pump operated by a hot blast is used to accelerate and afterburn the waste gases from the iron bath reactor.

4. A method according to one or more of claims 1 to 3, characterized in that the pressure is set higher in the melting cyclone than in the iron bath reactor.

5. A method according to one or more of claims 1 to 4, characterized in that the iron ore is blown into the melting cyclone in a ground form together with the hot blast.

6. A method according to one or more of claims 1 to 5, characterized in that the iron ore is introduced into the melting cyclone independently of the hot blast through a separate aperture.

7. A method according to one or more of claims 1 to 6, characterized in that further substances, in particular slag-forming additives, are blown into the melting cyclone.

8. A method according to one or more of claims 1 to 7, characterized in that ground limestone is blown into the melting cyclone.

9. A method according to one or more of claims 1 to 8, characterized in that a hot blast is used with an increased oxygen content up to 50% $O_2$.

10. A method according to one or more of claims 1 to 9, characterized in that the supplied hot blast has a temperature of 1100°C to 1300°C.

Fig.: 1

EP 0 237 811 B1